# EUROPÄISCHE PATENTSCHRIFT

(11) **EP 4 134 581 B1**
(45) Veröffentlichungstag und Bekanntmachung des Hinweises auf die Patenterteilung: **04.12.2024**
(21) Anmeldenummer: 21190596.3
(22) Anmeldetag: 10.08.2021
(51) Int. Cl.: F16L 59/147, B29C 48/00, F16L 59/153, F16L 59/02, F16L 11/10, B29C 48/09, B29C 48/151, B29C 48/21

(54) **THERMISCH GEDÄMMTES, FLEXIBLES LEITUNGSROHR, VERFAHREN ZUR HERSTELLUNG EINES SOLCHEN LEITUNGSROHRS UND DESSEN VERWENDUNG**
THERMALLY INSULATED, FLEXIBLE CONDUIT AND METHOD OF MANUFACTURING SUCH A CONDUIT AND ITS USE
CONDUITE FLEXIBLE ISOLÉ ET PROCÉDÉ DE FABRICATION D'UNE TELLE CONDUITE ET SON UTILISATION

(43) Veröffentlichungstag der Anmeldung: 15.02.2023
(73) Patentinhaber: Fibron Pipe GesmbH, 4300 St. Valentin (AT); RK Infra GesmbH, 4300 St. Valentin (AT)
(72) Erfinder: Wedl, Gerald, 3161 St. Veit an der Gölsen (AT); Keßler, Andreas, 82049 Pullach im Isartal (DE)
(74) Vertreter: Ege Lee & Roider Patentanwälte

(56) Entgegenhaltungen:
- WO-A1-2013/079455
- CH-A5- 680 815
- RU-C2- 2 630 810

## Beschreibung

Die Erfindung betrifft ein thermisch gedämmtes, flexibles Leitungsrohr. Außerdem betrifft die Erfindung ein Verfahren zur Herstellung eines thermisch gedämmten, flexiblen Leitungsrohrs.

Als flexible Leitungsrohre kommen oft faserverstärke Kunststoffrohre zum Einsatz, die zum Transport unterschiedlicher Medien, wie Wasser, Öl oder Gas, dienen, beispielsweise bei der Onshore- oder Offshore-Förderung für den Transport an Land oder über dem Meeresboden. Flexible Leitungsrohre finden auch beim Fernwärmeleitungsbau Verwendung, um Medien für Wasser- und Heizungsversorgungsanlagen zu transportieren. Insbesondere weisen faserverstärke Kunststoffrohre, wie thermoplastische Kompositrohre ("Thermoplastic Composite Pipes", TCP), eine hohe Druckbeständigkeit mit Arbeitsdrücken zwischen 40 bis 300 bar auf und ermöglichen so einen Transport des Mediums über lange Strecken.

Thermoplastische Kompositrohre weisen üblicherweise eine Innenlage aus ein- oder mehrschichtigen Innenliner aus thermoplastischem Material auf. Auf diese wird eine Kompositlage, zum Beispiel durch Aufwickeln faserverstärkter Tapes, aufgebracht. Derartige Kompositrohre sind beispielsweise aus dem Dokument WO 95/07428 A1 oder WO 2017/048117 A1 bekannt. Weiterer technologischer Hintergrund kann der RU 2 630 810 C2, CH680 815 A5 und WO 2013/079455 A1 entnommen werden.

Beim Transport eines, insbesondere warmen oder heißen, Mediums über weite Strecken mittels thermoplastischer Kompositrohre kann es jedoch zu Wärmeverlusten kommen. Die Wärmeverluste können dazu führen, dass sich die Fließfähigkeit des transportierten Mediums verändert oder ein Temperaturniveau für eine nachfolgende Anwendung nicht mehr bereitgestellt werden kann. In solchen Fällen ist dann eine aufwändige und energieintensive Wiedererwärmung des Mediums notwendig. In gleicher Weise kann es beim Transport kalter Medien bei hohen Umgebungstemperaturen notwendig werden, das Medium nochmals aufwändig zu Kühlen.

Der Erfindung liegt die Aufgabe zugrunde, ein eingangs genanntes Leitungsrohr strukturell und/oder funktionell zu verbessern. Außerdem liegt der Erfindung die Aufgabe zugrunde, ein eingangs genanntes Verfahren zur Herstellung eines Leitungsrohrs funktionell zu verbessern.

Die Aufgabe wird gelöst mit einem Leitungsrohr mit den Merkmalen des Anspruchs 1. Außerdem wird die Aufgabe gelöst mit einem Verfahren zum Herstellen eines Leitungsrohrs mit den Merkmalen des Anspruchs 13. Anspruch 24 betrifft die Verwendung eines solchen Leitungsrohres. Vorteilhafte Ausführungen und/oder Weiterbildungen sind Gegenstand der Unteransprüche.

Ein Leitungsrohr kann ein thermisch gedämmtes und/oder flexibles Leitungsrohr sein. Das Leitungsrohr kann zumindest ein Mediumrohr umfassen. Das Leitungsrohr kann beispielsweise zwei, drei, vier oder mehr Mediumrohre umfassen. Das Mediumrohr kann ein Innenrohr, beispielsweise aus Kunststoff, wie thermoplastischem Kunststoff, aufweisen. Das Mediumrohr kann eine um das Innenrohr herum angeordnete Verstärkungsschicht aufweisen. Das Mediumrohr kann einen um die Verstärkungsschicht herum angeordneten Schutzmantel aufweisen.

Das Leitungsrohr und/oder dessen Mediumrohr kann zum Transport von unterschiedlichen Medien, wie beispielsweise flüssige oder gasförmige Medien, wie Wasser, Öl oder Gas, dienen und/oder ausgebildet sein. Beispielsweise kann das Innenrohr des Mediumrohrs zum Transport von unterschiedlichen Medien, wie zum Beispiel flüssige oder gasförmige Medien, wie Wasser, Öl, wie Rohöl, oder Gas, wie Rohgas, dienen und/oder ausgebildet sein. Das Leitungsrohr kann zum Einsatz bei Wasser-, Öl- oder Gasnetzen bzw. Wasser-, Öl- oder Gasleitungen dienen und/oder ausgebildet sein. Das Leitungsrohr kann zum Einsatz bei der Onshore- oder Offshore-Förderung bzw. dem Onshore- oder Offshore-Transport für den Transport eines Mediums an Land oder über dem Meeresboden dienen und/oder ausgebildet sein. Das Leitungsrohr kann zum Einsatz in Nah- oder Fernwärmenetzen bzw. Nah- oder Fernwärmeleitungen dienen und/oder ausgebildet sein. Das Leitungsrohr kann zum Einsatz bei Geothermienetzen bzw. Geothermienleitungen dienen und/oder ausgebildet sein. Das Leitungsrohr kann beispielsweise ausgebildet sein, um Medien für Wasser- und Heizungsversorgungsanlagen zu transportieren. Das Leitungsrohr kann zum Einsatz bei Trink- oder Abwasserleitungen dienen und/oder ausgebildet sein.

Das Leitungsrohr und/oder dessen Mediumrohr kann ein, beispielsweise flexibles und/oder wickelbares und/oder nichtmetallisches Rohr, insbesondere Verbundrohr, sein. Das Verbundrohr kann ein thermoplastisches Verbundrohr sein. Das Leitungsrohr und/oder dessen Mediumrohr kann biegbar ausgebildet sein. Das Leitungsrohr und/oder dessen Mediumrohr kann so ausgebildet sein, um zu Ringen und/oder auf Trommeln gewickelt zu werden. Das Leitungsrohr und/oder dessen Mediumrohr kann an Terrain-Bedingungen anpassbar sein. Das Leitungsrohr kann einen Innendurchmesser von etwa 30 bis 200 mm aufweisen. Das Leitungsrohr kann einen Außendurchmesser von etwa 76 bis 355 mm aufweisen.

Soweit nicht anders angegeben oder es sich aus dem Zusammenhang nicht anders ergibt, beziehen sich die Angaben "axial", "radial" und "in Umfangsrichtung" auf eine Erstreckungsrichtung der Längsachse und/oder Symmetrieachse des Leitungsrohrs und/oder Mediumrohrs. Das Leitungsrohr und/oder dessen Mediumrohr kann konzentrisch zur Längsachse und/oder Symmetrieachse sein. "Axial" entspricht dann einer Erstreckungsrichtung der Längsachse und/oder Symmetrieachse. "Radial" ist dann eine zur Erstreckungsrichtung der Längsachse und/oder Symmetrieachse senkrechte und sich mit der Längsachse und/oder Symmetrieachse schneidende Richtung. "In Umfangsrichtung" entspricht dann einer Kreisbogenrichtung um die Längsachse und/oder Symmetrieachse.

Das Mediumrohr kann ein faserverstärktes, beispielsweise thermoplastisches, Kunststoffrohr sein. Das Mediumrohr kann ein Mehrschichtrohr sein. Das Mediumrohr kann ein, beispielsweise thermoplastisches, Verbundrohr sein. Das Mediumrohr kann ein verstärktes, wie faserverstärktes, Verbundrohr sein. Das Mediumrohr kann ein Kompositrohr sein. Das Mediumrohr kann ein thermoplastisches Kompositrohr, wie Thermoplastic Composite Pipe (TCP), sein. Das Mediumrohr kann radial innenseitig am Leitungsrohr angeordnet sein. Das Mediumrohr kann ein Basisrohr oder Trägerrohr sein. Das Mediumrohr kann extrudiert oder pultriert sein oder werden. Das Mediumrohr kann mittels eines Extrusionsverfahrens, beispielsweise Koextrusionsverfahrens, oder Pultrusionsverfahrens hergestellt sein oder werden. Beispielsweise kann das Mediumrohr mittels eines Extruders oder mehreren Extrudern und/oder eines Rohrkopfes hergestellt bzw. extrudiert sein oder werden.

Das Innenrohr des Mediumrohrs kann ein Innenliner sein. Das Innenrohr bzw. der Innenliner kann ein- oder mehrschichtig sein. Das Innenrohr kann ein Mehrschichtrohr sein. Das Innenrohr kann ein Basisrohr oder Trägerrohr sein. Das Innenrohr des Mediumrohres kann radial innenseitig am Mediumrohr angeordnet sein. Das Innenrohr kann ein Kunststoffrohr, wie thermoplastisches Kunststoffrohr, sein. Das Innenrohr des Mediumrohrs kann aus, beispielsweise thermoplastischem, Kunststoff hergestellt sein oder werden. Der Kunststoff kann beispielsweise Polyolefin, Polyethylen, Polyethylen mit hoher Dichte (HDPE), Polypropylen oder Polyamid sein oder aufweisen. Das Innenrohr kann extrudiert oder pultriert sein oder werden. Das Innenrohr kann mittels eines Extrusionsverfahrens oder Pultrusionsverfahrens hergestellt sein oder werden. Beispielsweise kann das Innenrohr mittels eines Extruders und/oder eines Rohrkopfes hergestellt bzw. extrudiert sein oder werden.

Die Verstärkungsschicht des Mediumrohrs kann mindestens eine Lage aus verstärkenden Fasern aufweisen. Die Fasern können Glasfasern und/oder Kunststofffasern und/oder Kohlefasern und/der Aramidfasern und/oder Basaltfasern und/oder keramische Fasern sein. Der Querschnitt der Fasern kann kreisförmig, rechteckig, oval, elliptisch oder kokonförmig sein. Die Fasern können als Kurzfasern, Langfasern oder Endlosfasern ausgebildet sein. Die Fasern können als Gewebe oder mit einer unidirektionalen Faserlage ausgebildet sein. Die Verstärkungsschicht des Mediumrohrs kann ein Matrixmaterial aus mit Kunststoff imprägnierten Fasern aufweisen. Der Kunststoff kann ein thermoplastischer Kunststoff sein. Der Kunststoff kann beispielsweise Polyolefin, Polyethylen, Polyethylen mit hoher Dichte (HDPE), Polypropylen oder Polyamid sein oder aufweisen. Das Matrixmaterial kann beispielsweise mittels eines Imprägnierverfahrens, Schmelzauftragverfahrens, Schmelzimprägnierverfahrens, Pulverimprägnierverfahrens oder Pultrusionsverfahrens hergestellt sein oder werden.

Die Verstärkungsschicht des Mediumrohrs kann in radialer Richtung zwischen dem Innenrohr und dem Schutzmantel des Mediumrohrs angeordnet sein. Die Verstärkungsschicht des Mediumrohrs kann mindestens eine erste Lage aus verstärkendem Band aufweisen. Die erste Lage aus verstärkendem Band kann im Wesentlichen spiralförmig in einer ersten spiralförmigen Richtung um das Innenrohr herumgewickelt sein oder werden. Die Verstärkungsschicht kann mindestens eine zweite Lage aus verstärkendem Band aufweisen. Die zweite Lage aus verstärkendem Band kann im Wesentlichen spiralförmig um das Innenrohr und/oder die erste Lage aus verstärkendem Band in einer zweiten spiralförmigen Richtung, beispielsweise entgegen der ersten spiralförmigen Richtung, herumgewickelt sein oder werden. Es können mehrere, wie drei, vier oder mehr, Lagen aus verstärkendem Band vorgesehen sein, welche jeweils in einer spiralförmigen Richtung, insbesondere in unterschiedlichen spiralförmigen Richtungen, um das Innenrohr herumgewickelt sind oder werden. Die mehreren Lagen aus verstärkendem Band können wie die erste und/oder zweite Lage aus verstärkendem Band ausgebildet sein.

Die erste Lage aus verstärkendem Band kann ein verstärkendes Band umfassen bzw. sein, welches mit Kunststoff imprägnierte Fasern aufweist. Die zweite Lage aus verstärkendem Band kann ein verstärkendes Band umfassen bzw. sein, welches mit Kunststoff imprägnierte Fasern aufweist. Der Kunststoff kann ein thermoplastischer Kunststoff sein. Der Kunststoff kann beispielsweise Polyolefin, Polyethylen, Polyethylen mit hoher Dichte (HDPE), Polypropylen oder Polyamid sein oder aufweisen. Die Fasern der ersten und/oder zweiten Lage aus verstärkendem Band können unidirektional angeordnet und/oder ausgerichtet sein oder werden. Die erste und/oder zweite Lage aus verstärkendem Band kann/können ein mit Kunststoff imprägniertes Faserband, beispielsweise Endlosfasern, Fasergewebe oder Fasergewirk, aufweisen. Der Kunststoff kann ein thermoplastischer Kunststoff sein. Der Kunststoff kann beispielsweise Polyolefin, Polyethylen, Polyethylen mit hoher Dichte (HDPE), Polypropylen oder Polyamid sein oder aufweisen. Die Fasern der ersten und/oder zweiten Lage aus verstärkendem Band können Verstärkungsfasern, beispielsweise Glasfasern und/oder Kunststofffasern und/oder Kohlefasern und/der Aramidfasern und/oder Basaltfasern und/oder keramische Fasern, sein. Der Querschnitt der Fasern kann kreisförmig, rechteckig, oval, elliptisch oder kokonförmig sein. Die Fasern können als Kurzfasern, Langfasern oder Endlosfasern ausgebildet sein. Die Fasern können als Gewebe oder Gewirk oder mit einer unidirektionalen Faserlage ausgebildet und/oder angeordnet sein. Die erste und/oder zweite Lage aus verstärkendem Band kann auch als Tape, wie faserverstärktes Tape, bezeichnet werden. Die erste und/oder zweite Lage aus verstärkendem Band kann beispielsweise mittels eines Imprägnierverfahrens, Schmelzauftragverfahrens, Schmelzimprägnierverfahrens, Pulverimprägnierverfahrens oder Pultrusionsverfahrens hergestellt sein oder werden.

Die Verstärkungsschicht kann mit dem Innenrohr des Mediumrohrs fest verbunden sein oder werden. Die Verstärkungsschicht kann mit der radial außenseitigen Fläche, wie Außenfläche oder Oberfläche, des Innenrohrs des Mediumrohrs fest verbunden sein oder werden. Die erste und/oder zweite Lage aus verstärkendem Band oder die mehreren Lagen aus verstärkendem Band kann/können mit dem Innenrohr des Mediumrohrs fest verbunden sein oder werden. Die Verstärkungsschicht und/oder dessen erste und/oder zweite Lage aus verstärkendem Band kann mit der äußeren Oberfläche bzw. radial außenseitigen Fläche, wie Außenfläche oder Oberfläche, des Innenrohrs des Mediumrohrs fest verbunden sein oder werden. Die Verbindung kann beispielsweise stoffschlüssig, wie verklebt, verschweißt oder verschmolzen, und/oder kraftschlüssig sein. Beispielsweise kann/können die erste und/oder zweite Lage aus verstärkendem Band mit dem Innenrohr des Mediumrohrs, insbesondere mit der äußeren Oberfläche des Innenrohrs, schmelzverbundartig, wie zum Beispiel verklebt, verschweißt oder verschmolzen, und/oder mittels einer kraftschlusseffektiven Bindungsmethode fest miteinander verbunden sein oder werden. Eine solche Verbindung kann auch als "fester Verbund" und/oder "bonded" bezeichnet werden.

Die Verstärkungsschicht kann mit dem Schutzmantel des Mediumrohrs fest verbunden sein oder werden. Die Verstärkungsschicht kann mit der radial innenseitigen Fläche, wie Innenfläche oder Oberfläche, des Schutzmantels des Mediumrohrs fest verbunden sein oder werden. Die erste und/oder zweite Lage aus verstärkendem Band oder die mehreren Lagen aus verstärkendem Band kann/können mit dem Schutzmantel des Mediumrohrs fest verbunden sein oder werden. Die Verstärkungsschicht und/oder dessen erste und/oder zweite Lage aus verstärkendem Band kann mit der inneren Oberfläche bzw. radial innenseitigen Fläche, wie Innenfläche oder Oberfläche, des Schutzmantels des Mediumrohrs fest verbunden sein oder werden. Die Verbindung kann beispielsweise stoffschlüssig, wie verklebt, verschweißt oder verschmolzen, und/oder kraftschlüssig sein. Beispielsweise kann/können die erste und/oder zweite Lage aus verstärkendem Band mit dem Schutzmantel des Mediumrohrs, insbesondere mit der inneren Oberfläche des Schutzmantels, schmelzverbundartig, wie zum Beispiel verklebt, verschweißt oder verschmolzen, und/oder mittels einer kraftschlusseffektiven Bindungsmethode fest miteinander verbunden sein oder werden. Eine solche Verbindung kann auch als "fester Verbund" und/oder "bonded" bezeichnet werden.

Der Schutzmantel des Mediumrohres kann ein äußerer Mantel des Mediumrohres sein. Der Schutzmantel des Mediumrohres kann radial außenseitig am Mediumrohr angeordnet sein. Der Schutzmantel des Mediumrohres kann ein Rohr, wie Kunststoffrohr, oder eine Folie, wie Kunststofffolie, sein. Der Schutzmantel kann ein Folienschlauch, wie Kunststofffolienschlauch, sein. Der Schutzmantel des Mediumrohres kann aus, beispielsweise thermoplastischem, Kunststoff hergestellt sein oder werden. Der Kunststoff kann beispielsweise Polyolefin, Polyethylen, Polyethylen mit hoher Dichte (HDPE), Polypropylen oder Polyamid sein oder aufweisen. Der Schutzmantel kann extrudiert sein oder werden. Der Schutzmantel kann mittels eines Extrusionsverfahrens hergestellt sein oder werden. Beispielsweise kann der Schutzmantel mittels eines Extruders und/oder eines Rohrkopfes hergestellt bzw. extrudiert sein oder werden.

Das Mediumrohr kann einen Innendurchmesser von etwa 30 bis 200 mm aufweisen. Das Mediumrohr kann einen Außendurchmesser von etwa 40 bis 265 mm aufweisen. Das Mediumrohr kann eine Wanddicke von etwa 5,0 bis 32,5 mm aufweisen.

Das Leitungsrohr kann eine Wärmedämmung aufweisen. Die Wärmedämmung kann um das Mediumrohr herum angeordnet sein. Das Leitungsrohr kann eine Ummantelung aufweisen. Die Ummantelung kann um die Wärmedämmung herum angeordnet sein. Die Wärmedämmung kann in radialer Richtung zwischen dem Mediumrohr und der Ummantelung des Leitungsrohrs angeordnet sein.

Die Wärmedämmung kann mit dem Mediumrohr fest verbunden sein oder werden. Die Wärmedämmung kann mit dem Schutzmantel des Mediumrohrs fest verbunden sein oder werden. Die Wärmedämmung kann mit der äußeren Oberfläche des Mediumrohrs und/oder dessen Schutzmantels fest verbunden sein oder werden. Die Wärmedämmung kann mit einer radial außenseitigen Fläche, wie Außenfläche oder Oberfläche, des Mediumrohrs und/oder dessen Schutzmantels fest verbunden sein oder werden. Die Verbindung kann beispielsweise stoffschlüssig, wie verklebt, verschweißt oder verschmolzen, und/oder kraftschlüssig sein. Eine solche Verbindung kann auch als "fester Verbund" und/oder "bonded" bezeichnet werden. Die Verbindung kann durch die Wärmedämmung selbst verursacht sein. Die Wärmedämmung kann klebende Eigenschaften aufweisen.

Die Wärmedämmung kann mit der Ummantelung des Leitungsrohrs fest verbunden sein oder werden. Die Wärmedämmung kann mit der inneren Oberfläche der Ummantelung fest verbunden sein oder werden. Die Wärmedämmung kann mit einer radial innenseitigen Fläche, wie Innenfläche oder Oberfläche, der Ummantelung des Leitungsrohrs fest verbunden sein oder werden. Die Verbindung kann beispielsweise stoffschlüssig, wie verklebt, verschweißt oder verschmolzen, und/oder kraftschlüssig sein. Eine solche Verbindung kann auch als "fester Verbund" und/oder "bonded" bezeichnet werden. Die Verbindung kann durch die Wärmedämmung selbst verursacht sein.

Die Wärmedämmung kann zur thermischen Isolation, insbesondere eines im Mediumrohr bzw. im Innenrohr des Mediumrohrs vorhandenen Mediums, dienen. Die Wärmedämmung kann einen Schaumstoff umfassen und/oder daraus hergestellt sein oder werden. Der Schaumstoff kann ein offenzelliger oder geschlossenzelliger Schaumstoff sein. Der Schaumstoff kann ein wärmedämmender Schaumstoff sein und/oder aus einem wärmedämmenden Material hergestellt sein oder werden. Die Wärmedämmung und/oder der Schaumstoff kann einen Kunststoffschaum, beispielsweise einen aufgeschäumten Kunststoffschaum, umfassen und/oder daraus hergestellt sein oder werden. Der Kunststoffschaum kann beispielsweise auf der Basis von Polyurethan (PUR), Polyisocyanurat (PIR), thermoplastischen Polyester oder thermoplastischen Polyolefin hergestellt sein oder werden. Der Kunststoffschaum kann zum Beispiel Polyurethanschaum (PUR), wie Polyurethan-Hartschaum, oder Polyisocyanurat-schaum, wie Polyiso-Hartschaum (PIR), sein. Die Wärmedämmung und/oder dessen Schaumstoff bzw. Kunststoffschaum kann eine Dichte von etwa 40 bis 80 kg/m³ und/oder eine Druckfestigkeit von 0,1 bis 0,5 MPa aufweisen.

Die Wärmedämmung kann mit einer Schicht ummantelt sein. Die Schicht kann, beispielsweise in radialer Richtung, zwischen der Wärmedämmung und der Ummantelung des Leitungsrohrs angeordnet sein. Beispielsweise kann die Wärmedämmung mit einer Folie, wie Trennfolie, ummantelt sein. Die Schicht und/oder Folie kann ein Folienschlauch, wie Kunststofffolienschlauch, sein. Die Schicht und/oder Folie kann aus, beispielsweise thermoplastischem, Kunststoff hergestellt sein oder werden. Der Kunststoff kann beispielsweise Polyolefin, Polyethylen, Polyethylen mit hoher Dichte (HDPE), Polypropylen oder Polyamid sein oder aufweisen. Die Schicht und/oder Folie kann extrudiert sein oder werden. Die Schicht und/oder Folie kann mittels eines Extrusionsverfahrens hergestellt sein oder werden. Beispielsweise kann die Schicht und/oder Folie mittels eines Extruders und/oder eines Rohrkopfes oder eines Folienextruders hergestellt bzw. extrudiert sein oder werden.

Die Wärmedämmung kann als ein- oder mehrlagige Wärmedämmung ausgebildet sein. Die Wärmedämmung kann eine oder mehrere, beispielsweise zwei, drei, vier oder mehr, Schichten, wie Wärmedämmschichten, aufweisen. Jede Schicht der Wärmedämmung kann aus einem wärmedämmenden Material, wie Schaumstoff und/oder Kunststoffschaum, hergestellt sein oder werden. Der Schaumstoff bzw. Kunststoffschaum kann wie vorstehend und/oder nachfolgend beschrieben ausgebildet und/oder hergestellt sein oder werden. Die Schichten der Wärmedämmung können unterschiedlich ausgebildet, beispielsweise mit unterschiedlichen Schaumstoffen bzw. Kunststoffschäumen ausgebildet sein oder werden. Die Schichten der Wärmedämmung können jeweils durch eine Zwischenschicht, wie Folie, voneinander getrennt ausgebildet sein oder werden. Die Zwischenschicht und/oder Folie kann ein Folienschlauch, wie Kunststofffolienschlauch, sein. Die Zwischenschicht und/oder Folie kann aus, beispielsweise thermoplastischem, Kunststoff hergestellt sein oder werden. Der Kunststoff kann beispielsweise Polyolefin, Polyethylen, Polyethylen mit hoher Dichte (HDPE), Polypropylen oder Polyamid sein oder aufweisen. Die Zwischenschicht und/oder Folie kann extrudiert sein oder werden. Die Zwischenschicht und/oder Folie kann mittels eines Extrusionsverfahrens hergestellt sein oder werden. Beispielsweise kann die Zwischenschicht und/oder Folie mittels eines Extruders und/oder eines Rohrkopfes hergestellt bzw. extrudiert sein oder werden.

Die Wärmedämmung kann einen Innendurchmesser von etwa 40 bis 265 mm aufweisen. Die Wärmedämmung kann einen Außendurchmesser von etwa 72bis 348 mm aufweisen. Die Wärmedämmung kann eine Wanddicke von etwa 16 bis 50 mm aufweisen. Eine oder jede Schicht, wie Wärmedämmschicht, der Wärmedämmung kann eine Wanddicke von etwa 16 bis 50 mm aufweisen.

Die Ummantelung des Leitungsrohrs kann radial außenseitig am Leitungsrohr angeordnet sein oder werden. Die Ummantelung des Leitungsrohrs kann ein Außenrohr, beispielsweise ein flexibles und/oder biegbares Außenrohr, oder eine Folie, beispielsweise ein flexibler Folienschlauch, sein. Die Ummantelung kann aus, beispielsweise thermoplastischem, Kunststoff hergestellt, beispielsweise extrudiert, sein oder werden. Der Kunststoff kann Polyolefin, Polyethylen, Polyethylen mit hoher Dichte (HDPE), Polypropylen oder Polyamid sein oder aufweisen. Die Ummantelung kann eine Kunststofffolie, zum Beispiel ein Kunststofffolienschlauch, sein. Die Ummantelung des Leitungsrohrs kann eine Wanddicke von etwa 1,0 bis 5,0 mm, beispielsweise von etwa 2 mm aufweisen. Beispielsweise kann die Ummantelung mittels eines Extruders und/oder eines Rohrkopfes hergestellt bzw. extrudiert sein oder werden.

Das Leitungsrohr kann eine Folie, wie Trennfolie und/oder Kunststofffolie, aufweisen. Die Folie kann zwischen der Wärmedämmung und der Ummantelung angeordnet sein. Die Folie, beispielsweise die innere Oberfläche der Folie, kann mit der Wärmedämmung fest verbunden, beispielsweise stoffschlüssig, wie verklebt, verschweißt oder verschmolzen, und/oder kraftschlüssig verbunden, sein. Die Folie, beispielsweise die äußere Oberfläche der Folie, kann mit der Ummantelung fest verbunden, beispielsweise stoffschlüssig, wie verklebt, verschweißt oder verschmolzen, und/oder kraftschlüssig verbunden, sein. Die Folie kann ein Schlauch, wie Folienschlauch, sein. Die Folie kann aus, beispielsweise thermoplastischem, Kunststoff hergestellt, beispielsweise extrudiert, sein oder werden. Der Kunststoff kann Polyolefin, Polyethylen, Polyethylen mit geringer Dichte (LD-PE), lineares Polyethylen mit niederer / geringer Dichte (LLD-PE), Polyethylen mit hoher Dichte (HDPE), Polypropylen oder Polyamid sein oder aufweisen. Beispielsweise kann die Folie mittels eines Extruders, wie Folienextruders, hergestellt bzw. extrudiert sein oder werden.

Die Wärmedämmung bzw. zumindest ein Oberflächenbereich der Wärmedämmung und/oder die Folie und/oder die Ummantelung des Leitungsrohrs kann glatt und/oder gewellt ausgebildet sein oder werden. Die radial außenseitige Fläche, wie Außenfläche oder Oberfläche, der Wärmedämmung und/oder der Folie und/oder der Ummantelung kann glatt und/oder gewellt ausgebildet sein oder werden. Die Wärmedämmung und/oder die Folie und/oder die Ummantelung des Leitungsrohrs und/oder dessen radial außenseitige Fläche kann gleichmäßig und/oder ungleichmäßig gewellt sein. Die Wärmedämmung und/oder die Folie und/oder die Ummantelung des Leitungsrohrs und/oder dessen radial außenseitige Fläche kann ein Wellenprofil aufweisen. Das Wellenprofil kann Wellentäler und Wellenberge aufweisen. Die Wellentäler können größer, beispielsweise breiter, wie in Längsrichtung des Leitungsrohrs breiter, sein als die Wellenberge. Die Wellenberge können größer, beispielsweise breiter, wie in Längsrichtung des Leitungsrohrs breiter, sein als die Wellentäler. Das Wellenprofil kann Wellenflanken aufweisen. Die Wellenflanken können, beispielsweise steile / steiler, ansteigende und/oder, beispielsweise flache / flacher, abfallende Wellenflanken aufweisen. Die Wärmedämmung und/oder die Folie und/oder die Ummantelung des Leitungsrohrs und/oder dessen radial außenseitige Fläche kann korrugiert ausgebildet sein oder werden. Die Wärmedämmung und/oder die Folie und/oder die Ummantelung des Leitungsrohrs kann flexibel und/oder biegbar ausgebildet sein oder werden. Die Folie und/oder Ummantelung des Leitungsrohrs kann eine Schutzschicht sein.

Das Leitungsrohr kann mittels eines Extrusionsverfahrens, beispielsweise Koextrusionsverfahrens, bzw. einer Extrusionsanlage hergestellt sein oder werden. Beispielsweise kann das Leitungsrohr mittels eines Extruders oder mehreren Extrudern und/oder eines Rohrkopfes hergestellt bzw. extrudiert sein oder werden. Das Leitungsrohr kann mittels eines Backenbandverfahrens bzw. einer Backenbandanlage hergestellt sein oder werden.

Eine Verwendung eines vorstehend und/oder nachfolgend beschriebenen Leitungsrohrs kann für den Transport von Öl, wie Rohöl, Gas, wie Rohgas, Wasser, Öl-Wasser-Gemisch, Öl-Gas-Gemisch oder anderen aus den genannten Stoffen kombinierte Gemische sein und/oder dienen.

Bei einem Verfahren zur Herstellung eines Leitungsrohrs, wie thermisch gedämmten, flexiblen Leitungsrohrs, kann die Wärmedämmung in diskontinuierlicher oder kontinuierlicher Arbeitsweise zwischen dem Mediumrohr und der Ummantelung angeordnet werden. Bei einem Verfahren zur Herstellung eines Leitungsrohrs, wie thermisch gedämmten, flexiblen Leitungsrohrs, kann in kontinuierlicher Arbeitsweise die Wärmedämmung auf das Mediumrohr aufgebracht werden. Das Leitungsrohr kann wie vorstehend und/oder nachfolgend beschrieben ausgebildet sein oder werden. Das Leitungsrohr kann so hergestellt werden, dass das Leitungsrohr zumindest ein Mediumrohr, eine Wärmedämmung und eine Ummantelung umfasst, wobei das zumindest eine Mediumrohr ein Innenrohr aus thermoplastischem Kunststoff, eine Verstärkungsschicht und einen Schutzmantel aufweist. Die Wärmedämmung kann um das zumindest eine Mediumrohr herum angeordnet bzw. angebracht und/oder befestigt werden. Die Ummantelung kann um die Wärmedämmung herum angeordnet bzw. angebracht und/oder befestigt werden.

Das zumindest eine Mediumrohr und/oder dessen Innenrohr kann extrudiert, beispielsweise koextrudiert, werden. Das Innenrohr des Mediumrohrs kann auf einer Trommel aufgewickelt und/oder gelagert und/oder von der Trommel abgewickelt werden. Die Verstärkungsschicht kann auf das Innenrohr des Mediumrohrs aufgebracht werden, beispielsweise durch Aufwickeln bzw. um das Innenrohr herumwickeln. Die Verstärkungsschicht kann mit dem Innenrohr des Mediumrohrs fest verbunden werden, beispielsweise stoffschlüssig, wie verklebt, verschweißt oder verschmolzen, und/oder kraftschlüssig und/oder "gebonded". Der Schutzmantel kann auf das mit der Verstärkungsschicht versehene Innenrohr des Mediumrohrs aufgebracht, beispielsweise extrudiert, wie aufextrudiert, oder aufgewickelt bzw. herumgewickelt werden. Das mit der Verstärkungsschicht versehene Innenrohr des Mediumrohrs kann in den Schutzmantel eingeführt und/oder eingeschoben werden. Der Schutzmantel kann mit der Verstärkungsschicht des Mediumrohrs fest verbunden werden, beispielsweise stoffschlüssig, wie verklebt, verschweißt oder verschmolzen, und/oder kraftschlüssig und/oder "gebonded".

Das Mediumrohr kann auf einer Trommel aufgewickelt und/oder gelagert und/oder von der Trommel abgewickelt werden. Das Mediumrohr kann, beispielsweise kontinuierlich oder diskontinuierlich, bereitgestellt werden. Zum Beispiel kann ein Teil eines Mediumrohrs bereitgestellt werden. Das Teil des Mediumrohrs kann im Wesentlichen geradlinig oder als Formteil bereitgestellt werden. Das Formteil kann gebogen sein oder werden und/oder zumindest abschnittsweise I-, T- oder U-förmig ausgebildet sein oder werden. Beispielsweise kann das Mediumrohr als T-Stück oder als Rohrstange bereitgestellt werden.

Die Ummantelung kann, beispielsweise kontinuierlich oder diskontinuierlich, bereitgestellt werden. Die Ummantelung kann vorgefertigt sein oder werden. Das Mediumrohr und/oder ein Teil des Mediumrohrs kann in die Ummantelung eingeführt und/oder eingeschoben werden. Zwischen dem Mediumrohr bzw. dem Teil des Mediumrohrs und der Ummantelung können Abstandshalter bereitgestellt werden. Durch die Abstandshalter kann ein Raum, wie Hohlraum, Spalt oder Ringspalt, zwischen dem Mediumrohr und der Ummantelung gebildet werden. In den Raum zwischen dem Mediumrohr und der Ummantelung kann eine flüssige und/oder aufschäumende Zusammensetzung, wie Kunststoffzusammensetzung, als Wärmedämmung eingebracht, beispielsweise eingefüllt und/oder eingespritzt und/oder eingesprüht, werden. Die Wärmedämmung kann wie vorstehend und/oder nachfolgend beschrieben ausgebildet sein oder werden.

Eine flüssige und/oder aufschäumende Zusammensetzung, wie Kunststoffzusammensetzung, kann als Wärmedämmung auf die, insbesondere bereitgestellte, Ummantelung, beispielsweise auf die innere Oberfläche der Ummantelung, aufgebracht werden. Eine flüssige und/oder aufschäumende Zusammensetzung, wie Kunststoffzusammensetzung, kann als Wärmedämmung auf eine Folie, wie Kunststofffolie, aufgebracht werden. Die Folie kann eine Trennfolie sein. Die Folie kann, beispielsweise kontinuierlich oder diskontinuierlich, bereitgestellt werden.

Die mit der flüssigen und/oder aufschäumenden Zusammensetzung bzw. Kunststoffzusammensetzung versehene Ummantelung und/oder Folie kann dann zusammen mit dem Mediumrohr in einem Formwerkzeug, wie Backenband, eingeführt werden.

Das Mediumrohr und ein aus einer Folie kontinuierlich gebildeter Folienschlauch kann in einem Formwerkzeug, wie Backenband, bereitgestellt werden. Dabei kann das Mediumrohr innerhalb des Folienschlauches angeordnet werden, beispielsweise so, dass zwischen dem Mediumrohr und dem Folienschlauch ein Raum, wie Hohlraum, Spalt oder Ringspalt, ausgebildet wird. Hierfür können Abstandshalter zwischen dem Mediumrohr und dem Folienschlauch vorgesehen bzw. bereitgestellt werden. In den Raum kann eine flüssige und/oder aufschäumende Zusammensetzung, wie Kunststoffzusammensetzung, als Wärmedämmung eingebracht, beispielsweise eingefüllt und/oder eingespritzt und/oder eingesprüht, werden.

Die Form des Backenbands, insbesondere dessen innere Oberfläche, kann die Form, wie die radial äußere Oberfläche bzw. Außenschicht, der Ummantelung und/oder der Folie und/oder der Wärmedämmung vorgeben und/oder ausbilden. Beispielsweise kann die innere Oberfläche des Backenbands ein Wellenprofil aufweisen. Das Wellenprofil des Backenbands kann so ausgebildet sein, dass das vorstehend und/oder nachfolgend beschriebene Wellenprofil der Ummantelung und/oder Folie und/oder Wärmedämmung ausgebildet werden kann. Das Backenband kann ein Formwerkzeug sein. Das Formwerkzeug kann Formhälften, beispielsweise zwei Formhälften, aufweisen. Die Formhälften können gegenüberliegend angeordnet sein oder werden. Zwei Formhälften können ein Formwerkzeugpaar bilden. Es können mehrere Formwerkzeugpaare vorgesehen sein. Das Formwerkzeug und/oder dessen Formhälften können mitlaufend ausgebildet sein. Das Formwerkzeug und/oder dessen Formhälften können beheizbar oder kühlbar ausgebildet sein. Die Formhälften bzw. dessen inneren Oberflächen können das Wellenprofil aufweisen. Das Backenband und/oder Formwerkzeug kann dazu ausgebildet sein, das Leitungsrohrs, wie thermisch gedämmte, flexible Leitungsrohr, zu erzeugen bzw. herzustellen.

Bei einer diskontinuierlichen Arbeitsweise kann beispielsweise das Mediumrohr in Teilen, wie Stangen / Rohrstangen, oder als vorgefertigte Formteile, wie Bögen oder T-Stücke, herausgeschnitten und/oder vorgefertigt und/oder bereitgestellt werden. Die Stangen / Rohrstangen können unterschiedliche Längen, zum Beispiel bis zu etwa 16 m pro Teil aufweisen. Die Teile des Mediumrohrs können in die Ummantelung und/oder eine Folie, wie Folienschlauch, eingefügt werden, beispielsweise mittels Abstandshaltern. Die Folie kann eine Kunststofffolie und/oder Trennfolie sein. Alternativ können die Teile des Mediumrohrs mit der Ummantelung und/oder Folie versehen werden. Die Ummantelung und/oder Folie kann vorgefertigt sein oder werden. Der Hohlraum zwischen dem Teil des Mediumrohrs und der Ummantelung und/oder Folie kann mit einer flüssigen und/oder aufschäumenden Zusammensetzung, wie Kunststoffzusammensetzung, als Wärmedämmung gefüllt, wie ausgefüllt, werden.

Bei einer kontinuierlichen Arbeitsweise kann beispielsweise das Mediumrohr auf Trommeln gelagert und/oder mit den Trommeln zur Herstellungsanlage gebracht werden. Eine flüssige und/oder aufschäumenden Zusammensetzung, wie Kunststoffzusammensetzung, kann als Wärmedämmung in einem kontinuierlichen Prozess um das Mediumrohr herum angebracht und/oder aufgebracht werden. Die flüssige und/oder aufschäumenden Zusammensetzung, wie Kunststoffzusammensetzung, kann auf die Ummantelung und/oder eine Folie, wie Folienschlauch und/oder Trennfolie und/oder Kunststofffolie, aufgebracht werden. Das Mediumrohr und die Ummantelung und/oder Folie kann dann in ein Backenband eingeführt werden.

Bei einer kontinuierlichen Arbeitsweise kann die Wärmedämmung auf das zumindest eine Mediumrohr aufgebracht und/oder aufgetragen werden, beispielsweise kontinuierlich aufgebracht und/oder aufgetragen werden. Eine flüssige und/oder aufschäumende Kunststoffzusammensetzung kann als Wärmedämmung auf das Mediumrohr, beispielsweise auf die äußere Oberfläche des Mediumrohrs und/oder dessen Schutzmantels, aufgebracht und/oder aufgetragen werden. Die Ummantelung kann, beispielsweise nahtlos, auf die Wärmedämmung, beispielsweise direkt oder indirekt, aufgebracht, beispielsweise extrudiert, wie aufextrudiert, werden.

Das zumindest eine Mediumrohr kann von einer Trommel abgewickelt werden. Das zumindest eine Mediumrohr kann in Längsrichtung des Mediumrohrs bereitgestellt und/oder transportiert und/oder von der Trommel abgezogen werden. Das zumindest eine Mediumrohr kann, beispielsweise mittels einer Heizeinrichtung, wie Infrarotheizeinrichtung oder Elektrowiderstandsheizeinrichtung, vorerwärmt bzw. vorgewärmt werden. Eine Folie, wie Kunststofffolie und/oder Trennfolie, kann um das Mediumrohr herum geformt, wie gelegt und/oder gewickelt, werden. Eine flüssige und/oder aufschäumende Kunststoffzusammensetzung kann als Wärmedämmung, beispielsweise mittels einer Pistole oder mittels eines Mischkopfs, in einen Raum, wie Spalt, zwischen der Folie und dem zumindest einen Mediumrohr eingebracht, wie eingespritzt, eingesprüht oder eingelassen, werden. Unter Einlassen kann auch ein Einlaufen oder Einfließen lassen der flüssigen und/oder aufschäumenden Kunststoffzusammensetzung in den Raum zwischen der Folie und dem zumindest einen Mediumrohr verstanden werden. Der Raum kann ein Dämmstoffausformungsbereich sein. Der Dämmstoffausformungsbereich kann durch die Folie, insbesondere die Innenseite der Folie, und das zumindest eine Mediumrohr, insbesondere die Außenseite des zumindest einen Mediumrohrs, definiert und/oder gebildet sein. Das Einbringen der flüssigen und/oder aufschäumenden Kunststoffzusammensetzung kann kontinuierlich erfolgen. Die Folie kann zu einem Schlauch, wie Folienschlauch, geformt werden. Dabei können Längskanten der Folie verschweißt und/oder verklebt werden. Die Ausformung der Folie zu einem Schlauch kann kontinuierlich erfolgen. Die Ausformung der Folie zu einem Schlauch kann unmittelbar nach dem Umlegen der Folie um das zumindest eine Mediumrohr und/oder unmittelbar nach dem Einbringen der flüssigen und/oder aufschäumenden Kunststoffzusammensetzung in den durch die Folie und das zumindest eine Mediumrohr definierten und/oder gebildeten Raum erfolgen. Die Wärmedämmung kann zumindest in ihrem Oberflächenbereich und/oder die Folie / Folienschlauch kann/können durch ein Formwerkzeug, wie Backenband, geformt werden, beispielsweise glatt oder wellenförmig geformt werden. Das Formen der Wärmedämmung und/oder der Folie / Folienschlauch kann durch das Formwerkzeug in einem ersten Teilschritt und in einem ersten Teilbereich und in einem weiteren Teilschritt in einem weiteren Teilbereich erfolgen. Die Teilbereiche und/oder Teilschritte können, beispielsweise unmittelbar, hintereinander sein. Das Formen der Wärmedämmung und/oder der Folie / Folienschlauch kann kontinuierlich erfolgen. Die Folie / Folienschlauch kann ausgebildet sein und/oder dazu dienen, ein Haften, wie Anhaften, beispielsweise der Kunststoffzusammensetzung bzw. Wärmedämmung, an dem Formwerkzeug zu verhindern. Das Formwerkzeug kann beheizt oder gekühlt werden. Dadurch kann das Aushärten der Kunststoffzusammensetzung beeinflusst, beispielsweise verzögert oder beschleunigt, und/oder ein Aushärtezeitpunkt eingestellt werden. Die flüssige und/oder aufschäumende Kunststoffzusammensetzung kann aufschäumen und/oder aushärten, beispielsweise vor und/oder während dem Formen durch das Formwerkzeug. Die flüssige und/oder aufschäumende Kunststoffzusammensetzung kann nach dem Formen durch das Formwerkzeug zu der bzw. als Wärmedämmung ausgehärtet sein. Die Ummantelung kann, beispielsweise nahtlos, auf die ausgeformte und/oder ausgehärtete Wärmedämmung und/oder auf die, insbesondere ausgeformte, Folie / Folienschlauch aufgebracht, beispielsweise extrudiert, wie aufextrudiert, werden. Das Extrudieren kann mittels eines Extruders, wie Einschneckenextruder, und/oder mittels eines Rohrkopfes erfolgen. Das Aufbringen der Ummantelung kann kontinuierlich erfolgen. Die Ummantelung kann die Form der äußeren Oberfläche der ausgeformten und/oder ausgehärteten Wärmedämmung und/oder der, insbesondere ausgeformten, Folie / Folienschlauch annehmen und/oder aufweisen. Das Leitungsrohr kann dann mittels einer Kühleinrichtung, wie Kühlungsbadeinrichtung, gekühlt werden und/oder auf eine Trommel aufgewickelt werden. Die Kühleinrichtung und/oder die Kühlungsbadeinrichtung kann eine Wasserkühlungseinrichtung und/oder Kühlwassereinrichtung sein. Die Kühleinrichtung kann Düsen, wie Spritzdüsen, aufweisen, mittels denen Kühlwasser auf das Leitungsrohr gespitzt werden kann.

Das zumindest eine Mediumrohr kann wie vorstehend und/oder nachfolgend ausgebildet sein oder werden. Die Folie kann wie vorstehend und/oder nachfolgend ausgebildet sein oder werden. Die Ummantelung kann wie vorstehend und/oder nachfolgend ausgebildet sein oder werden. Das Formwerkzeug kann wie vorstehend und/oder nachfolgend ausgebildet sein. Die Zusammensetzung bzw. Kunststoffzusammensetzung kann wie vorstehend und/oder nachfolgend ausgebildet sein oder werden. Die Zusammensetzung bzw. Kunststoffzusammensetzung kann der vorstehend und/oder nachfolgend beschriebene aufschäumende Schaumstoff und/oder Kunststoffschaum sein. Die Wärmedämmung kann durch Aufschäumen und/oder Aushärten der flüssigen und/oder aufschäumenden Zusammensetzung bzw. Kunststoffzusammensetzung ausgebildet werden. Die Zusammensetzung bzw. Kunststoffzusammensetzung kann ein reagierendes bzw. reaktives Kunststoffsystem, beispielsweise ein Polyurethansystem oder Polyisozyanoratsystem, sein. Die Zusammensetzung bzw. Kunststoffzusammensetzung kann ein reaktiver und/oder aufschäumender Schaumstoff und/oder Kunststoffschaum sein. Beispielsweise kann mindestens eine Isocyanatkomponente und mindestens ein Polyol zusammengeführt werden, die das reaktive Kunststoffsystem bilden. Das Kunststoffsystem kann aufgeschäumt und/oder ausgehärtet werden. Die Zusammensetzung / Kunststoffzusammensetzung bzw. das Kunststoffsystem kann mittels eines Mischkopfs gemischt und/oder erzeugt und/oder bereitgesellt werden.

Eine Vorrichtung zum Herstellen eines thermisch gedämmten, flexiblen Leitungsrohrs kann zumindest eine Vorratstrommel zum Bevorraten eines Mediumrohrs, ein Rollensystem, eine Heizeinrichtung zum Vorwärmen des Mediumrohrs, eine Vorratsspule zum Bevorraten einer Folie, eine Zuführeinrichtung zum Zuführen der Folie, eine Pistole und/oder Mischkopf zum Einbringen eines flüssigen und/oder aufschäumenden Kunststoffzusammensetzung als Wärmedämmung, eine Folienschweißeinrichtung zum Bilden eines Folienschlauchs, ein Formwerkzeug, wie Backenband, zum Formen der Wärmedämmung und/oder Folie, eine Ummantelungsaufbringeinheit, wie Extruder und/oder Rohrkopf, zum Aufbringen einer Ummantelung und/oder eine Kühleinrichtung, wie Kühlungsbadeinrichtung, zum Kühlen des Leitungsrohrs. Die Kühleinrichtung und/oder Kühlungsbadeinrichtung kann eine Wasserkühlungseinrichtung und/oder Kühlwassereinrichtung sein. Die Kühleinrichtung kann Düsen, wie Spritzdüsen, aufweisen, die ausgebildet sind, Kühlwasser auf das Leitungsrohr zu spritzen. Die Vorrichtung kann ferner einen Abzug, wie Bandabzug, und/oder eine weitere Vorratstrommel zum Aufwickeln und/oder Bevorraten des hergestellten Leitungsrohrs aufweisen. Die Vorrichtung zum Herstellen des Leitungsrohrs kann zur Durchführung zumindest eines der vorstehend und/oder nachfolgend beschriebenen Verfahren ausgebildet und/oder eingerichtet sein. Die Vorrichtung zum Herstellen des Leitungsrohrs kann ausgebildet und/oder eingerichtet sein, das vorstehend und/oder nachfolgend beschriebene Leitungsrohr herzustellen.

Mit der Erfindung kann eine gleichmäßige Wärmedämmung an allen Stellen des Leitungsrohrs ermöglicht werden. Wärmeverluste des zu transportierenden Mediums können vermieden oder zumindest stark reduziert werden. Die Fließfähigkeit des zu transportierenden Mediums kann zumindest im Wesentlichen unverändert aufrechterhalten werden. Geforderte Temperaturniveaus können eingehalten werden.

Nachfolgend werden Ausführungsbeispiele der Erfindung unter Bezugnahme auf Figuren näher beschrieben, dabei zeigen schematisch und beispielhaft:
- Fig. 1: ein thermisch gedämmtes, flexibles Leitungsrohr im Querschnitt;
- Fig. 2: das Leitungsrohr gemäß Fig. 1 im Längsschnitt;
- Fig. 3: ein Flussdiagramm eines Verfahrens zur Herstellung des Leitungsrohrs gemäß Fig. 1 und 2; und
- Fig. 4: ein Flussdiagramm eines weiteren Verfahrens zur Herstellung des Leitungsrohrs gemäß Fig. 1 und 2.

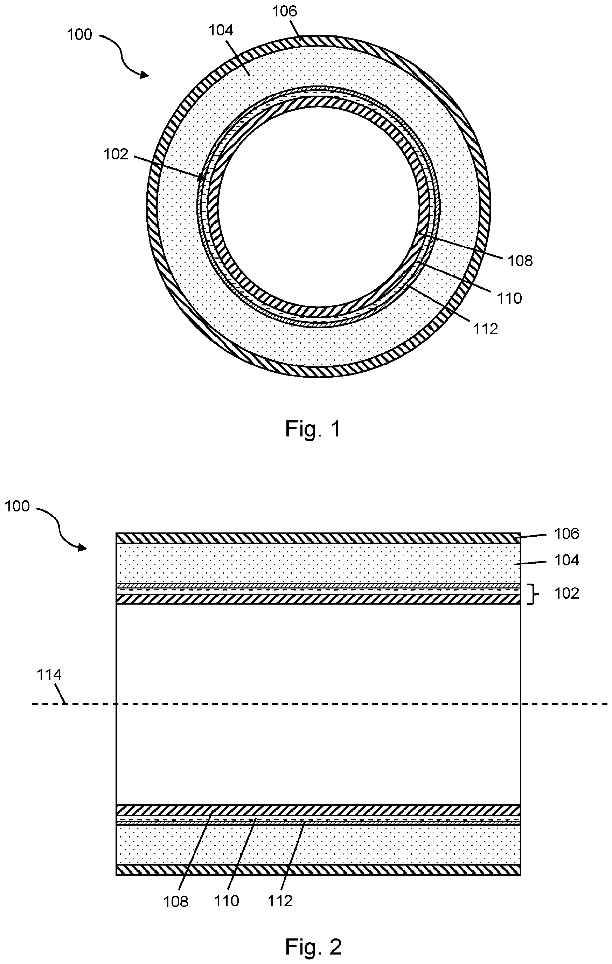

Fig. 1 zeigt im Querschnitt und Fig. 2 im Längsschnitt schematisch ein thermisch gedämmtes, flexibles Leitungsrohr 100. Das Leitungsrohr 100 weist ein Mediumrohr 102, eine Wärmedämmung 104 und eine Ummantelung 106 auf. Die Wärmedämmung 104 ist um das Mediumrohr 102 herum angeordnet und mit dem Mediumrohr 102 fest verbunden, beispielsweise verschweißt oder verklebt. Die Wärmedämmung 104 ist ein aufgeschäumter und ausgehärteter Polyurethanschaum und dient zur Wärmedämmung des im Mediumrohr 102 zu transportierenden Mediums. Die Ummantelung 106 ist aus Kunststoff hergestellt und um die Wärmedämmung 104 herum angeordnet. Die Ummantelung 106 ist mit der Wärmedämmung 104 ebenfalls fest verbunden, beispielsweise verschweißt oder verklebt. Die Ummantelung 106 dient zum Schutz der Wärmedämmung 104.

Das Mediumrohr 102 ist als ein flexibles, wickelbares und nichtmetallisches, thermoplastisches Verbundrohr ("thermoplastic composite pipe", TCP) ausgebildet. Das Mediumrohr 102 weist ein Innenrohr 108, wie Innenliner, auf, in dem das zu transportierende Medium geführt bzw. transportiert werden kann. Das Innenrohr 108 ist aus einem thermoplastischen Kunststoff, wie einem Polyethylen mit hoher Dichte (HDPE), hergestellt, beispielsweise extrudiert. Das Mediumrohr 102 weist ferner eine um das Innenrohr 108 angeordnete Verstärkungsschicht 110 auf. Die Verstärkungsschicht kann beispielsweise eine oder mehrere, wie zwei, Lagen aus verstärkendem Band umfassen, die mit Kunststoff imprägnierte, insbesondere unidirektional angeordnete, Fasern, beispielsweise Glasfasern und/oder Kunststofffasern und/oder Kohlefasern und/oder Aramidfasern, aufweisen. Die Lagen aus verstärkendem Band sind in unterschiedlichen Richtungen spiralförmig um das Innenrohr 108 herum angeordnet und mit diesem fest verbunden, wie verschweißt oder verklebt. Das Mediumrohr 102 weist ferner einen aus Kunststoff hergestellten Schutzmantel 112 auf. Der Schutzmantel 112 ist um die Verstärkungsschicht 110 des Mediumrohrs 102 herum angeordnet und mit dieser fest verbunden, wie verschweißt oder verklebt. Die Wärmedämmung 104 ist um den Schutzmantel 112 des Mediumrohrs 102 herum angeordnet und mit dem den Schutzmantel 112 fest verbunden, beispielsweise verschweißt oder verklebt.

Das Leitungsrohr 100 ist konzentrisch zu einer Achse 114, wie Längsachse und/oder Symmetrieachse.

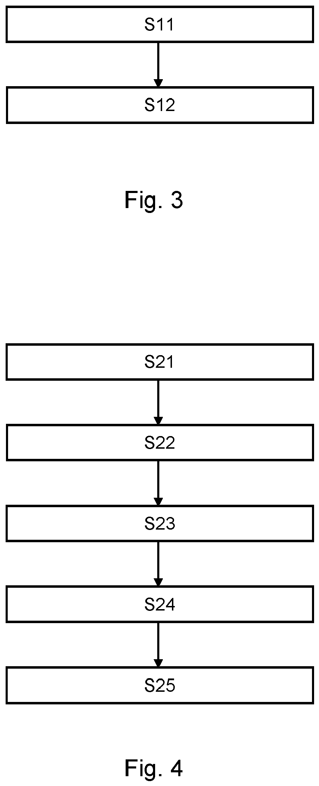

Fig. 3 zeigt schematisch ein Flussdiagramm eines Verfahrens zur Herstellung des Leitungsrohrs 100. Das Leitungsrohr 100 kann wie vorstehend und/oder nachfolgend beschrieben ausgebildet bzw. hergestellt sein oder werden.

In einem Schritt S11 wird das Mediumrohr 102 in die Ummantelung 106 eingeführt und/oder mit der Ummantelung 106 versehen.

In einem Schritt S12 wird die Wärmedämmung in diskontinuierlicher oder kontinuierlicher Arbeitsweise zwischen dem Mediumrohr 102 und der Ummantelung 106 angeordnet, wobei in den Raum zwischen dem Mediumrohr 102 und der Ummantelung 106 eine flüssige und/oder aufschäumende Zusammensetzung, wie Kunststoffzusammensetzung, als Wärmedämmung eingebracht, beispielsweise eingefüllt und/oder eingespritzt und/oder eingesprüht, wird. Die flüssige bzw. aufschäumende Zusammensetzung, wie Kunststoffzusammensetzung, kann wie vorstehend und/oder nachfolgend beschrieben ausgebildet sein oder werden. Beispielsweise kann mindestens eine Isocyanatkomponente und mindestens ein Polyol in einem Mischkopf zusammengeführt werden, die dann als gemischtes, reaktives, aufschäumendes Polyurethansystem in den Raum zwischen dem Mediumrohr 102 und der Ummantelung 106 eingefüllt und/oder eingespritzt und/oder eingesprüht werden. Der dann ausgehärtete Kunststoffschaum bildet dann die Wärmedämmung, welche wie vorstehend und/oder nachfolgend beschrieben ausgebildet sein kann.

Bei einer kontinuierlichen Arbeitsweise kann beispielsweise das Mediumrohr 102 zusammen mit der Ummantelung 106 in ein Backenband eingeführt und der zwischen dem Mediumrohr 102 und der Ummantelung 106 vorhandene Ringspalt mit der flüssigen und/oder aufschäumenden Zusammensetzung, wie Kunststoffzusammensetzung, als Wärmedämmung eingebracht werden. Alternativ kann die Ummantelung 106 mit der flüssigen und/oder aufschäumenden Zusammensetzung, wie Kunststoffzusammensetzung, versehen werden und dann zusammen mit dem Mediumrohr 102 in das Backenband eingebracht werden.

Im Übrigen wird ergänzend insbesondere auf Fign. 1 und 2 und die zugehörige Beschreibung verwiesen.

Fig. 4 zeigt schematisch ein Flussdiagramm eines Verfahrens zur Herstellung des Leitungsrohrs 100 mittels eines kontinuierlichen Prozesses. Das Leitungsrohr 100 kann wie vorstehend und/oder nachfolgend beschrieben ausgebildet bzw. hergestellt sein oder werden.

In einem Schritt S21 wird eine Folie, wie Trennfolie, um das zumindest eine Mediumrohr 102 herum geformt, wie gelegt und/oder gewickelt.

In einem Schritt S22 wird die Wärmedämmung 104 auf das Mediumrohr 102 aufgebracht und/oder aufgetragen. Dabei wird eine flüssige und/oder aufschäumende Zusammensetzung, wie Kunststoffzusammensetzung, als Wärmedämmung 104 um das Mediumrohr 102 herum aufgebracht und/oder aufgetragen, wobei die flüssige und/oder aufschäumende Zusammensetzung, wie Kunststoffzusammensetzung, als Wärmedämmung 104 in einen Raum, wie Spalt, zwischen der Folie und dem zumindest einen Mediumrohr 102 eingebracht, wie eingespritzt, eingesprüht oder eingelassen, wird. Die flüssige bzw. aufschäumende Zusammensetzung, wie Kunststoffzusammensetzung, kann wie vorstehend und/oder nachfolgend beschrieben ausgebildet sein oder werden. Beispielsweise kann mindestens eine Isocyanatkomponente und mindestens ein Polyol in einem Mischkopf zusammengeführt werden, die dann als gemischtes, reaktives, aufschäumendes Polyurethansystem auf das Mediumrohr 102, insbesondere auf die äußere Oberfläche des Mediumrohrs 102 bzw. dessen Schutzmantels 112, aufgebracht und/oder aufgetragen wird bzw. in den Raum zwischen der Folie und dem zumindest einem Mediumrohr 102 eingebracht wird.

In einem Schritt S23 wird die Folie zu einem Folienschlauch geformt, wobei Längskanten der Folie verschweißt und/oder verklebt werden.

In einem Schritt S24 wird die Wärmedämmung 104 zumindest in ihrem Oberflächenbereich und/oder die Folie durch ein Formwerkzeug, wie Backenband, glatt oder wellenförmig geformt.

In einem Schritt S25 wird dann die Ummantelung 106 auf die ausgeformte Wärmedämmung 104 bzw. auf ausgeformte Folie aufgebracht, beispielsweise extrudiert, wie aufextrudiert.

Der dann ausgehärtete Kunststoffschaum bildet dann die Wärmedämmung, welche wie vorstehend und/oder nachfolgend beschrieben ausgebildet sein kann.

Im Übrigen wird ergänzend insbesondere auf Fign. 1 bis 3 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl aller Schritte des Verfahrens bzw. der Verfahren kann variiert und/oder kombiniert werden. Die Verfahren können miteinander kombiniert werden.

### Bezugszeichen

- 100: Leitungsrohr
- 102: Mediumrohr
- 104: Wärmedämmung
- 106: Ummantelung
- 108: Innenrohr
- 110: Verstärkungsschicht
- 112: Schutzmantel
- 114: Achse

- S11: Schritt zum Einführen bzw. Versehen des Mediumrohrs mit der Ummantelung
- S12: Schritt zum Aufbringen bzw. Einbringen der flüssigen und/oder aufschäumenden Zusammensetzung, wie Kunststoffzusammensetzung

- S21: Schritt zum Formen einer Folie um das Mediumrohr herum
- S22: Schritt zum Aufbringen der flüssigen und/oder aufschäumenden Zusammensetzung, wie Kunststoffzusammensetzung
- S23: Schritt zum Formen der Folie zu einem Folienschlauch
- S24: Schritt zum Formen der Wärmedämmung und/oder Folie in einem Formwerkzeug
- S25: Schritt zum Aufbringen der Ummantelung

## Patentansprüche

1. Thermisch gedämmtes, flexibles Leitungsrohr (100), umfassend zumindest ein Mediumrohr(102), eine um das Mediumrohr (102) herum angeordnete Wärmedämmung (104) und eine um die Wärmedämmung (104) herum angeordnete Ummantelung (106), wobei das zumindest eine Mediumrohr (102) ein Innenrohr (108) aus thermoplastischem Kunststoff, eine um das Innenrohr (108) herum angeordnete Verstärkungsschicht (110) und einen um die Verstärkungsschicht (110) herum angeordneten Schutzmantel (112) aufweist, **dadurch gekennzeichnet, dass** die Verstärkungsschicht (110) mit dem Innenrohr (108) und/oder mit dem Schutzmantel (112) des Mediumrohrs (102) verschweißt oder verschmolzen ist.

2. Leitungsrohr (100) nach Anspruch 1, **dadurch gekennzeichnet, dass** die Verstärkungsschicht (110) mindestens eine erste Lage aus verstärkendem Band aufweist, das im Wesentlichen spiralförmig in einer ersten spiralförmigen Richtung um das Innenrohr (108) gewickelt ist.

3. Leitungsrohr (100) nach Anspruch 2, **dadurch gekennzeichnet, dass** die Verstärkungsschicht (110) mindestens eine zweite Lage aus verstärkendem Band aufweist, das im Wesentlichen spiralförmig um die erste Lage aus verstärkendem Band in einer zweiten spiralförmigen Richtung entgegen der ersten spiralförmigen Richtung gewickelt ist.

4. Leitungsrohr (100) nach Anspruch 2 oder 3, **dadurch gekennzeichnet, dass** die erste Lage aus verstärkendem Band und/oder die zweite Lage aus verstärkendem Band ein verstärkendes Band umfasst, welches mit Kunststoff, wie Polyolefin, Polyethylen, Polyethylen mit hoher Dichte (HDPE), Polypropylen oder Polyamid, imprägnierte, insbesondere unidirektional angeordnete, Fasern, wie Glasfasern und/oder Kunststofffasern und/oder Kohlefasern und/oder Aramidfasern, aufweist.

5. Leitungsrohr (100) nach wenigstens einem der vorhergehenden Ansprüche,
**dadurch gekennzeichnet, dass** das Mediumrohr (102) ein, insbesondere flexibles und/oder wickelbares und/oder nichtmetallisches, thermoplastisches Verbundrohr ist.

6. Leitungsrohr (100) nach wenigstens einem der vorhergehenden Ansprüche,
**dadurch gekennzeichnet, dass** die Wärmedämmung (104) mit dem Mediumrohr (102), insbesondere mit der äußeren Oberfläche des Mediumrohrs (102), und/oder mit der Ummantelung (106) des Leitungsrohrs (100), insbesondere mit der inneren Oberfläche der Ummantelung (106), fest verbunden, insbesondere stoffschlüssig, wie verklebt, verschweißt oder verschmolzen, und/oder kraftschlüssig verbunden, ist.

7. Leitungsrohr (100) nach wenigstens einem der vorhergehenden Ansprüche,
**dadurch gekennzeichnet, dass** das Leitungsrohr (100) eine Folie, wie Trennfolie, aufweist, wobei die Folie zwischen der Wärmedämmung (104) und der Ummantelung (106) angeordnet ist, wobei die Folie, insbesondere die innere Oberfläche der Folie, mit der Wärmedämmung (104) fest verbunden, insbesondere stoffschlüssig, wie verklebt, verschweißt oder verschmolzen, und/oder kraftschlüssig verbunden, ist und/oder die Folie, insbesondere die äußere Oberfläche der Folie, mit der Ummantelung (106) fest verbunden, insbesondere stoffschlüssig, wie verklebt, verschweißt oder verschmolzen, und/oder kraftschlüssig verbunden, ist.

8. Leitungsrohr (100) nach wenigstens einem der vorhergehenden Ansprüche,
**dadurch gekennzeichnet, dass** die Wärmedämmung (104) einen Schaumstoff, insbesondere einen offenzelligen oder geschlossenzelligen Schaumstoff, umfasst und/oder daraus hergestellt ist.

9. Leitungsrohr (100) nach wenigstens einem der vorhergehenden Ansprüche,
**dadurch gekennzeichnet, dass** die Wärmedämmung (104) einen aufgeschäumten Kunststoffschaum, insbesondere auf der Basis von Polyurethan, Polyisocyanurat, thermoplastischen Polyester oder thermoplastischen Polyolefin, umfasst und/oder daraus hergestellt ist.

10. Leitungsrohr (100) nach wenigstens einem der vorhergehenden Ansprüche,
**dadurch gekennzeichnet, dass** die Ummantelung (106) des Leitungsrohrs (100) ein Außenrohr, insbesondere ein flexibles Außenrohr, oder eine Folie, insbesondere ein flexibler Folienschlauch, ist.

11. Leitungsrohr (100) nach wenigstens einem der vorhergehenden Ansprüche,
**dadurch gekennzeichnet, dass** die Wärmedämmung (104) und/oder die Folie und/oder die Ummantelung (106) des Leitungsrohrs (100) glatt oder gewellt, wie gleichmäßig oder ungleichmäßig gewellt, oder korrugiert ausgebildet ist.

12. Leitungsrohr (100) nach wenigstens einem der vorhergehenden Ansprüche,
**dadurch gekennzeichnet, dass** das Innenrohr (108) und/oder der Schutzmantel (112) des Mediumrohres (102) und/oder die Folie und/oder die Ummantelung (106) des Leitungsrohres (100) aus thermoplastischem Kunststoff, wie Polyolefin, Polyethylen, Polyethylen mit hoher Dichte (HDPE), Polypropylen oder Polyamid hergestellt, insbesondere extrudiert, ist.

13. Verfahren zur Herstellung eines thermisch gedämmten, flexiblen Leitungsrohrs (100), umfassend zumindest ein Mediumrohr (102), eine Wärmedämmung (104) und eine Ummantelung (106), wobei das zumindest eine Mediumrohr (102) ein Innenrohr (108) aus thermoplastischem Kunststoff, eine Verstärkungsschicht (110) und einen Schutzmantel (112) aufweist, **dadurch gekennzeichnet, dass** die Verstärkungsschicht (110) mit dem Innenrohr (108) und/oder mit dem Schutzmantel (112) des Mediumrohrs (102) verschweißt oder verschmolzen ist, bei dem die Wärmedämmung (104) in diskontinuierlicher oder kontinuierlicher Arbeitsweise zwischen dem Mediumrohr (102) und der Ummantelung (106) angeordnet wird (S12).

14. Verfahren nach Anspruch 13, **dadurch gekennzeichnet, dass** das Mediumrohr (102) in die Ummantelung (106) eingeführt (S11) und/oder mit der Ummantelung (106) versehen wird (S11) und in den Raum zwischen dem Mediumrohr (102) und der Ummantelung (106) eine flüssige und/oder aufschäumende Kunststoffzusammensetzung als Wärmedämmung (104) eingebracht wird (S12).

15. Verfahren nach Anspruch 13, **dadurch gekennzeichnet, dass** eine flüssige und/oder aufschäumende Kunststoffzusammensetzung als Wärmedämmung (104) auf die Ummantelung (106), insbesondere auf die innere Oberfläche der Ummantelung (106), oder auf eine Folie, aufgebracht wird (S12), die dann zusammen mit dem Mediumrohr (102) in einem Backenband eingeführt wird.

16. Verfahren nach Anspruch 13, **dadurch gekennzeichnet, dass** das Mediumrohr (102) und ein aus einer Folie kontinuierlich gebildeter Folienschlauch (106) in einem Backenband bereitgestellt wird, wobei das Mediumrohr (102) innerhalb des Folienschlauches (106) so angeordnet ist (S11), dass zwischen dem Mediumrohr (102) und dem Folienschlauch (106) ein Spalt, insbesondere Ringspalt, ausgebildet wird, und dass dann in den Spalt eine flüssige und/oder aufschäumende Kunststoffzusammensetzung als Wärmedämmung (104) eingebracht wird (S12).

17. Verfahren nach wenigstens einem der vorhergehenden Ansprüche 15 bis 16,
**dadurch gekennzeichnet, dass** die Form des Backenbands die Form der Ummantelung (106) und/oder der Folie vorgibt und/oder ausbildet.

18. Verfahren zur Herstellung eines thermisch gedämmten, flexiblen Leitungsrohrs (100), umfassend zumindest ein Mediumrohr (102), eine Wärmedämmung (104) und eine Ummantelung (106), wobei das zumindest eine Mediumrohr (102) ein Innenrohr (108) aus thermoplastischem Kunststoff, eine Verstärkungsschicht (110) und einen Schutzmantel (112) aufweist, **dadurch gekennzeichnet, dass** die Verstärkungsschicht (110) mit dem Innenrohr (108) und/oder mit dem Schutzmantel (112) des Mediumrohrs (102) verschweißt oder verschmolzen ist, bei dem in kontinuierlicher Arbeitsweise die Wärmedämmung (104) auf das zumindest eine Mediumrohr (102) aufgebracht und/oder aufgetragen (S22) und die Ummantelung (106) auf die Wärmedämmung (104) aufgebracht, insbesondere extrudiert, wie aufextrudiert, wird (S25).

19. Verfahren nach Anspruch 18, bei dem eine flüssige und/oder aufschäumende Kunststoffzusammensetzung als Wärmedämmung (104) auf das zumindest eine Mediumrohr (102), insbesondere auf die äußere Oberfläche des zumindest einen Mediumrohrs (102) und/oder dessen Schutzmantels (112), aufgebracht und/oder aufgetragen wird (S22).

20. Verfahren nach Anspruch 18 oder 19, bei dem eine Folie, wie Trennfolie, um das zumindest eine Mediumrohr (102) herum geformt, wie gelegt und/oder gewickelt, wird (S21), und eine flüssige und/oder aufschäumende Kunststoffzusammensetzung als Wärmedämmung (104) in einen Raum, wie Spalt, zwischen der Folie und dem zumindest einen Mediumrohr (102) eingebracht, wie eingespritzt, eingesprüht oder eingelassen, wird (S22).

21. Verfahren nach Anspruch 20, bei dem die Folie zu einem Folienschlauch geformt wird, wobei Längskanten der Folie verschweißt und/oder verklebt werden (S23).

22. Verfahren nach wenigstens einem der vorhergehenden Ansprüche 18 bis 21, bei dem die Wärmedämmung (104) zumindest in ihrem Oberflächenbereich und/oder die Folie durch ein Formwerkzeug, wie Backenband, glatt oder wellenförmig geformt werden (S24).

23. Verfahren nach wenigstens einem der vorhergehenden Ansprüche 18 bis 22, bei dem die Ummantelung (106) auf die ausgeformte Wärmedämmung (104) und/oder auf die, insbesondere ausgeformte, Folie aufgebracht, insbesondere extrudiert, wie aufextrudiert, wird (S25).

24. Verwendung des Leitungsrohrs (100) nach wenigstens einem der vorhergehenden Ansprüche 1 bis 12 für den Transport von Öl, wie Rohöl, Gas, wie Rohgas, Wasser, Öl-Wasser-Gemisch, Öl-Gas-Gemisch oder anderen aus den genannten Stoffen kombinierte Gemische.

## Claims

1. A thermally insulated flexible conduit (100) comprising at least one medium pipe (102), a thermal insulation (104) disposed around the medium pipe (102) and a jacket (106) disposed around the thermal insulation (104), the at least one medium pipe (102) having an inner pipe (108) of thermoplastic material, a reinforcing layer (110) arranged around the inner pipe (108) and a protective sheath (112) arranged around the reinforcing layer (110), **characterized in that** the reinforcing layer (110) is welded or fused to the inner pipe (108) and/or to the protective sheath (112) of the medium pipe (102).

2. Conduit (100) according to claim 1, **characterized in that** the reinforcing layer (110) comprises at least a first layer of reinforcing tape which is wound substantially spirally in a first spiral direction around the inner pipe (108).

3. Conduit (100) according to claim 2, **characterized in that** the reinforcing layer (110) comprises at least a second layer of reinforcing tape which is wound substantially spirally around the first layer of reinforcing tape in a second spiral direction opposite to the first spiral direction.

4. Conduit (100) according to claim 2 or 3, **characterized in that** the first layer of reinforcing tape and/or the second layer of reinforcing tape comprises a reinforcing tape which has fibres, in particular unidirectionally arranged fibres, such as glass fibres and/or plastic fibres and/or carbon fibres and/or aramid fibres, impregnated with plastic, such as polyolefin, polyethylene, high-density polyethylene (HDPE), polypropylene or polyamide.

5. Conduit (100) according to at least one of the preceding claims, **characterized in that** the medium pipe (102) is a thermoplastic composite pipe, in particular flexible and/or windable and/or non-metallic.

6. Conduit (100) according to at least one of the preceding claims, **characterized in that** the thermal insulation (104) is firmly connected to the medium pipe (102), in particular to the outer surface of the medium pipe (102), and/or to the jacket (106) of the conduit (100), in particular to the inner surface of the jacket (106), in particular in a materially bonded, such as glued, welded or fused, and/or force-locking manner.

7. Conduit (100) according to at least one of the preceding claims, **characterized in that** the conduit (100) has a foil, such as a separating foil, the foil being arranged between the thermal insulation (104) and the jacket (106), the foil, in particular the inner surface of the foil, being firmly connected to the thermal insulation (104), in particular materially bonded, such as glued, welded or fused, and/or frictionally bonded, and/or the foil, in particular the outer surface of the foil, is firmly bonded, in particular materially bonded, such as glued, welded or fused, and/or force-locking manner, to the jacket (106).

8. Conduit (100) according to at least one of the preceding claims, **characterized in that** the thermal insulation (104) comprises a foam, in particular an open-cell or closed-cell foam, and/or is produced therefrom.

9. Conduit (100) according to at least one of the preceding claims, **characterized in that** the thermal insulation (104) comprises a foamed-on plastic foam, in particular based on polyurethane, polyisocyanurate, thermoplastic polyester or thermoplastic polyolefin, and/or is produced therefrom.

10. Conduit (100) according to at least one of the preceding claims, **characterized in that** the jacket (106) of the conduit (100) is an outer pipe, in particular a flexible outer pipe, or a foil, in particular a flexible foil tube.

11. Conduit (100) according to at least one of the preceding claims, **characterized in that** the thermal insulation (104) and/or the foil and/or the jacket (106) of the conduit (100) is designed to be smooth or corrugated, such as uniformly or unevenly corrugated, or corrugated.

12. Conduit (100) according to at least one of the preceding claims, **characterized in that** the inner pipe (108) and/or the protective sheath (112) of the medium pipe (102) and/or the foil and/or the jacket (106) of the conduit (100) is made of thermoplastic material, such as polyolefin, polyethylene, high-density polyethylene (HDPE), polypropylene or polyamide, in particular extruded.

13. Method for producing a thermally insulated, flexible conduit (100), comprising at least one medium pipe (102), a thermal insulation (104) and a jacket (106), wherein the at least one medium pipe (102) has an inner pipe (108) made of thermoplastic material, a reinforcing layer (110) and a protective sheath (112), **characterized in that** the reinforcing layer (110) being welded or fused to the inner pipe (108) and/or to the protective sheath (112) of the medium pipe (102), in which the thermal insulation (104) is arranged in a discontinuous or continuous manner between the medium pipe (102) and the protective sheath (112).

14. Method according to claim 13, **characterized in that** the medium pipe (102) is introduced (S11) into the jacket (106) and/or provided (S11) with the jacket (106) and a liquid and/or foaming plastic composition is introduced (S12) into the space between the medium pipe (102) and the jacket (106) as thermal insulation (104).

15. Method according to claim 13, **characterized in that** a liquid and/or foaming plastic composition is applied (S12) as thermal insulation (104) to the jacket (106), in particular to the inner surface of the jacket (106), or to a film, which is then introduced together with the medium pipe (102) in a jaw conveyor.

16. Method according to claim 13, **characterized in that** the medium pipe (102) and a film tube (106) formed continuously from a film are provided in a jaw conveyor, the medium pipe (102) being arranged (S11) within the film tube (106) in such a way that between the medium pipe (102) and the film tube (106) there is a gap, in particular an annular gap, between the medium pipe (102) and the film tube (106), and that a liquid and/or foaming plastic composition is then introduced (S12) into the gap as thermal insulation (104).

17. Method according to at least one of the preceding claims 15 to 16,
**characterized in that** the shape of the jaw conveyor predetermines and/or
forms the shape of the jacket (106) and/or the film.

18. Method for producing a thermally insulated, flexible conduit (100), comprising at least one medium pipe (102), a thermal insulation (104) and a jacket (106), the at least one medium pipe (102) having an inner pipe (108) made of thermoplastic material, a reinforcing layer (110) and a protective sheathing (112), **characterized in that** the reinforcing layer (110) being welded or fused to the inner pipe (108) and/or to the protective sheath (112) of the medium pipe (102), in which the thermal insulation (104) is applied and/or put on (S22) to the at least one medium pipe (102) in a continuous process and the jacket (106) is applied (S25) to the thermal insulation (104), in particular extruded, such as extruded on.

19. Method according to claim 18, in which a liquid and/or foaming plastic composition is applied and/or put on (S22) as thermal insulation (104) to the at least one medium pipe (102), in particular to the outer surface of the at least one medium pipe (102) and/or its protective sheath (112).

20. The method according to claim 18 or 19, wherein a film, such as separating film, is formed (S21), such as laid and/or wrapped, around the at least one medium pipe (102), and a liquid and/or foaming plastic composition is introduced (S22), such as injected, sprayed or embedded, as thermal insulation (104) into a space, such as gap, between the film and the at least one medium pipe (102).

21. The method according to claim 20, in which the film is formed into a film tube,
wherein longitudinal edges of the film are welded and/or bonded (S23).

22. The method according to at least one of the preceding claims 18 to 21, wherein the thermal insulation (104) at least in its surface area and/or the foil are formed (S24) smooth or wavy by a forming tool, such as a jaw conveyer.

23. Method according to at least one of the preceding claims 18 to 22, in which the jacket (106) is applied (S25), in particular extruded, such as extruded on, to the formed thermal insulation (104) and/or to the, in particular formed, film.

24. Use of the conduit (100) according to at least one of the preceding claims 1 to 12 for the transportation of oil, such as crude oil, gas, such as crude gas, water, oil-water mixture, oil-gas mixture or other mixtures combined from the said substances.

## Revendications

1. Conduit flexible thermiquement isolé (100), comprenant au moins un tube de milieu (102), une isolation thermique (104) disposée autour du tube de milieu (102) et une gaine (106) disposée autour de l'isolation thermique (104), le au moins un tube de milieu (102) comprenant un tube intérieur (108) en matière thermoplastique, une couche de renforcement (110) disposée autour du tube intérieur (108) et une enveloppe de protection (112) disposée autour de la couche de renforcement (110), la couche de renforcement (110) étant soudée ou fusionnée avec le tube intérieur (108) et/ou avec l'enveloppe de protection (112) du tube de milieu (102).

2. Conduit (100) selon la revendication 1, **caractérisé en ce que** la couche de renforcement (110) comprend au moins une première couche de bande de renforcement enroulée de manière sensiblement hélico dale dans une première direction hélico dale autour du tube interne (108).

3. Conduit (100) selon la revendication 2, **caractérisé en ce que** la couche de renforcement (110) comprend au moins une deuxième couche de bande de renforcement enroulée de manière sensiblement hélico dale autour de la première couche de bande de renforcement dans une deuxième direction hélico dale opposée à la première direction hélico dale.

4. Conduit (100) selon la revendication 2 ou 3, **caractérisé en ce que** la première couche de bande de renforcement et/ou la deuxième couche de bande de renforcement comprend une bande de renforcement qui présente des fibres, telles que des fibres de verre et/ou des fibres de plastique et/ou des fibres de carbone et/ou des fibres d'aramide, imprégnées, en particulier disposées de manière unidirectionnelle, de matière plastique telle que la polyoléfine, le polyéthylène, le polyéthylène haute densité (PEHD), le polypropylène ou le polyamide.

5. Conduite (100) selon au moins l'une des revendications précédentes, **caractérisée en ce que** la conduite de fluide (102) est une conduite composite thermoplastique, notamment flexible et/ou enroulable et/ou non métallique.

6. Tube de conduite (100) selon au moins l'une des revendications précédentes, **caractérisé en ce que** l'isolation thermique (104) est reliée de manière fixe, en particulier par liaison de matière, comme par collage, soudage ou fusion, et/ou par liaison de force, au tube de milieu (102), en particulier à la surface extérieure du tube de milieu (102), et/ou à la gaine (106) du tube de conduite (100), en particulier à la surface intérieure de la gaine (106).

7. Conduit (100) selon au moins l'une des revendications précédentes, **caractérisé en ce que** le conduit (100) présente un film, tel qu'un film de séparation, le film étant disposé entre l'isolation thermique (104) et la gaine (106), le film, en particulier la surface intérieure du film, étant solidement relié à l'isolation thermique (104), en particulier par liaison de matière, telle que collée, soudée ou fondue, et/ou par liaison de force, et/ou la feuille, en particulier la surface extérieure de la feuille, est reliée solidement à l'enveloppe (106), en particulier par liaison de matière, telle que collée, soudée ou fondue, et/ou par liaison de force.

8. Conduit (100) selon au moins l'une des revendications précédentes, **caractérisé en ce que** l'isolant thermique (104) comprend et/ou est réalisé en une mousse, notamment une mousse à cellules ouvertes ou à cellules fermées.

9. Conduit (100) selon au moins l'une des revendications précédentes, **caractérisé en ce que** l'isolant thermique (104) comprend une mousse plastique expansée, notamment à base de polyuréthane, de polyisocyanurate, de polyester thermoplastique ou de polyoléfine thermoplastique, et/ou est fabriqué à partir de celle-ci.

10. Conduit (100) selon au moins l'une des revendications précédentes, **caractérisé en ce que** la gaine (106) du conduit (100) est un tube extérieur, notamment un tube extérieur flexible, ou un film, notamment un film tubulaire flexible.

11. Conduit (100) selon au moins l'une des revendications précédentes, **caractérisé en ce que** l'isolation thermique (104) et/ou le film et/ou la gaine (106) du conduit (100) sont lisses ou ondulés, comme ondulés de manière uniforme ou non, ou corrugés.

12. Conduit (100) selon au moins l'une des revendications précédentes, **caractérisé en ce que** le tube intérieur (108) et/ou la gaine de protection (114) sont en acier inoxydable. (112) du tube à fluide (102) et/ou le film et/ou la gaine (106) du tuyau de conduite (100) est fabriqué, en particulier par extrusion, à partir d'une matière thermoplastique, telle que la polyoléfine, le polyéthylène, le polyéthylène haute densité (PEHD), le polypropylène ou le polyamide.

13. Procédé de fabrication d'un tube de conduite flexible (100) isolé thermiquement, comprenant au moins un tube de milieu (102), une isolation thermique (104) et une gaine (106), le au moins un tube de milieu (102) comprenant un tube intérieur (108) en matière thermoplastique, une couche de renforcement (110) et une enveloppe de protection (112), la couche de renforcement (110) étant soudée ou fusionnée avec le tube intérieur (108) et/ou avec l'enveloppe de protection (112) du tube de milieu (102), dans lequel l'isolation thermique (104) est appliquée de manière discontinue ou continue entre le tube de milieu (108) et le tube de protection (112).

14. Procédé selon la revendication 13, **caractérisé en ce que** le tube de milieu (102) est introduit (S11) dans la gaine (106) et/ou est pourvu de la gaine (106) (S11) et une composition plastique liquide et/ou moussante est introduite (S12) dans l'espace entre le tube de milieu (102) et la gaine (106) comme isolation thermique (104).

15. Procédé selon la revendication 13, **caractérisé en ce qu'**une composition plastique liquide et/ou moussante est appliquée (S12) en tant qu'isolant thermique (104) sur la gaine (106), en particulier sur la surface intérieure de la gaine (106), ou sur un film, qui est ensuite introduit dans une bande de mâchoires en même temps que le tube de milieu (102).

16. Procédé selon la revendication 13, **caractérisé en ce que** le tube de milieu (102) et un tube de film (106) formé en continu à partir d'un film sont mis à disposition dans une bande à mâchoires, le tube de milieu (102) étant disposé (S11) à l'intérieur du tube de film (106) de telle sorte qu'entre le tube de milieu (102) et le tube de film (106), il y ait une fente, en particulier une fente annulaire, et **en ce qu'**une composition plastique liquide et/ou moussante est ensuite introduite dans la fente en tant qu'isolation thermique (104) (S12).

17. Procédé selon au moins l'une des revendications précédentes 15 à 16, **caractérisé en ce que** la forme de la bande de mors prédétermine et/ou forme la forme de la gaine (106) et/ou du film.

18. Procédé de fabrication d'un tube de conduite flexible (100) isolé thermiquement, comprenant au moins un tube de milieu (102), une isolation thermique (104) et une enveloppe (106), le au moins un tube de milieu (102) présentant un tube intérieur (108) en matière thermoplastique, une couche de renforcement (110) et une enveloppe protectrice (112), la couche de renforcement (110) étant soudée ou fondue avec le tube intérieur (108) et/ou avec l'enveloppe protectrice (112) du tube de milieu (102), dans lequel, en mode de travail continu, l'isolation thermique (104) est appliquée et/ou déposée (S22) sur le au moins un tube de milieu (102) et la gaine (106) est appliquée sur l'isolation thermique (104). (104), en particulier par extrusion, comme par extrusion sur (S25).

19. Procédé selon la revendication 18, dans lequel une composition plastique liquide et/ou moussante est appliquée et/ou appliquée (S22) en tant qu'isolation thermique (104) sur l'au moins un tube à fluide (102), en particulier sur la surface extérieure de l'au moins un tube à fluide (102) et/ou de sa gaine de protection (112).

20. Procédé selon la revendication 18 ou 19, dans lequel une feuille, telle qu'une feuille de séparation, est formée, telle que posée et/ou enroulée (S21), autour dudit au moins un tube de milieu (102), et une composition plastique liquide et/ou moussante est introduite, comme injecté, pulvérisé ou encastré, dans un espace, tel qu'une fente, en tant qu'isolant thermique (104) entre le film et le au moins un tube de milieu (102) (S22).

21. Procédé selon la revendication 20, dans lequel le film est formé en un film tubulaire, les bords longitudinaux du film étant soudés et/ou collés (S23).

22. Procédé selon au moins l'une des revendications précédentes 18 à 21, dans lequel l'isolant thermique (104), au moins dans sa zone de surface, et/ou le film sont formés (S24) de manière lisse ou ondulée par un outil de formage, tel qu'une bande à mâchoires.

23. Procédé selon au moins l'une des revendications précédentes 18 à 22, dans lequel la gaine (106) est appliqué, notamment par extrusion, tel qu'appliqué par extrusion, sur l'isolant thermique (104) mis en forme et/ou sur le film, notamment mis en forme (S25).

24. Utilisation du conduit (100) selon au moins l'une des revendications précédentes 1 à 12 pour le transport de pétrole, tel que du pétrole brut, de gaz, tel que du gaz brut, d'eau, de mélange huile-eau, de mélange huile-gaz ou d'autres mélanges combinés desdites substances.
